# EUROPÄISCHE PATENTANMELDUNG

(11) **EP 3 477 142 A1**
(43) Veröffentlichungstag der Anmeldung: **01.05.2019**
(21) Anmeldenummer: 18202022.2
(22) Anmeldetag: 23.10.2018
(51) Int. Cl.: F16F 1/387

(54) **ELASTOMER-METALL-LAGER**

(30) Priorität: 27.10.2017 DE 102017010005
(71) Anmelder: Jörn GmbH, 71336 Waiblingen (DE)
(72) Erfinder: Lippke, Oliver, 71686 Remseck (DE)
(74) Vertreter: Liebl, Thomas

(57) **Zusammenfassung**

Die Erfindung betrifft ein Elastomer-Metall-Lager, insbesondere als Konuslager, mit einem zentralen, stabilen, starren, vorzugsweise metallischen Innenrohr (2) und mit einer zentralen Verbindungsschraube (3) durch das Innenrohr (2), mit der ein erstes zu lagerndes Bauteil (4) mit dem Innenrohr (2) verbindbar ist. In ein Elastomer-Ringteil (5), das das Innenrohr (2) umschließt, ist ein stabiles, starres, vorzugsweise metallisches Anschlussteil (6) eingeformt ist, welches einen vom Elastomer-Ringteil (5) radial abstehenden Anschlussbereich (8) zum Anschluss eines zweiten zu lagernden Bauteils (9) aufweist. In einem Stirnseitenbereich ist eine massive Druckscheibe (11) mit einer zentralen Bohrung (15) angeordnet. Erfindungsgemäß weist die zentrale Bohrung (15) der Druckscheibe (11) ein Innengewinde (16) auf. Ein axial aus dem Elastomer-Ringteil (5) vorstehender freier Innenrohrbereich trägt ein dem Innengewinde (16) zugeordnetes Außengewinde (17), so dass die Druckscheibe (11) durch mehr oder weniger Aufschrauben auf den freien Innenrohrbereich axial in ihrer Lage in einem Verstellbereich verstellbar ist. Dadurch kann entsprechend die Federsteifigkeit verstellt und angepasst werden.

## Beschreibung

Die Erfindung betrifft ein Elastomer-Metall-Lager, insbesondere als Konuslager, nach dem Oberbegriff des Anspruchs 1.

Ein bekanntes, gattungsgemäßes Elastomer-Metall-Lager (DE 10 2004 047 173 A1) ist als elastisches Motorlager zur Lagerung einer Brennkraftmaschine an einem Kraftfahrzeug vorgesehen. Es weist ein zentrales, stabiles und starres Innenrohr aus relativ dickwandigem Metall auf mit einer durch das Innenrohr geführten Verbindungsschraube, mit der ein erstes zu lagerndes Bauteil, hier ein Aufbauträger, mit dem Innenrohr verbindbar ist.

Das Innenrohr ist von einem, sich bei einem vertikalen Einbau nach unten konisch verjüngenden Elastomer-Ringteil umschlossen, in das ein stabiles, starres Anschlussteil, hier ein Blechrohr, eingeformt ist, welches einen vom Elastomer-Ringteil radial abstehenden Anschlussbereich zum Anschluss eines zweiten zu lagernden Bauteils, hier eine Motorstütze, aufweist. Weiter ist eine obere, in einer Radialebene liegende Druckscheibe mit einer zentralen Bohrung, durch die eine Verbindungsschraube geführt ist, vorgesehen.

Die Druckschreibe liegt hier an der oberen Stirnseite des Innenrohrs und ein plattenförmiger Teil des Aufbauträgers an der unteren Stirnseite des Innenrohrs an. Beide Teile sind mit der Verbindungsschraube gegen das Innenrohr verschraubt. Die Druckscheibe hat somit bezüglich des Innenrohrs und des Elastomer-Ringteils im montierten Zustand eine ortsfeste unveränderliche Lage. Zwischen der Druckscheibe und dem Elastomer-Ringteil liegt hier ein Spann-Ringteil aus Elastomermaterial von oben her mit einer Dichtlippe auf der Motorstütze, dergestalt dass bei allen Ein- und Ausfederzuständen die Dichtlippe die Motorstütze abdichtet und bei starker Ausfederung zusätzlicher Druck auf das Elastomer-Ringteil aufgbringbar ist.

Die Federkonstante ist somit hier für eine bestimmte Lagerstelle durch die unveränderliche Geometrie und Relativlage der Bauteile und die Elastomerhärte vorgegeben und kann an die Lagerstelle nicht durch eine Veränderung angepasst oder nicht nachträglich an der Lagerstelle betriebsbedingt verändert und eingestellt werden. Änderungen der Federkonstante eines solchen gattungsgemäßen Standardlagers sind nur durch andere Lagerdimensionierungen, nicht jedoch am selben Lager möglich.

Aufgabe der Erfindung ist es, ein gattungsgemäßes Elastomer-Metall-Lager so weiterzubilden, dass dessen Federkonstante, vorzugsweise in axialer Richtung, ohne Änderungen an den Bauteilen oder der Elastomerhärte in einem gewissen Bereich veränderbar und einstellbar ist.

Diese Aufgabe wird mit den Merkmalen des Anspruchs 1 gelöst.

Gemäß Anspruch 1 weißt die zentrale Bohrung der Druckscheibe ein Innengewinde auf. Ein axial aus dem Elastomer-Ringteil vorstehender freier Innenrohrbereich trägt ein, dem Innengewinde entsprechendes Außengewinde, wobei die Druckscheibe durch mehr oder weniger Aufschrauben auf den freien Innenrohrbereich axial in ihrer Lage entsprechend der Gewindelänge relativ zum Elastomer-Ringteil verstellbar ist.

In diesem Verstellbereich liegt entweder zwischen der Druckscheibe und dem Elastomer-Ringteil ein Freiraum, in den sich das Elastomer-Ringteil bei einer Lagerbelastung hinein verformt. Durch eine Verstellung der Druckscheibe in Richtung auf das Elastomer-Ringteil ist ein solcher Freiraum verkleinerbar, so dass dadurch die belastungsabhängige Verformung des Elastomer-Ringteils beschränkt und behindert ist. Eine solche Einschränkung der Elastomer-Materialverformung führt zu einer Vergrößerung der Lagersteifigkeit, insbesondere in einer axialen Richtung.

Die Druckscheibe kann je nach den Bauteildimensionierungen auch im ganzen Verstellbereich zumindest in einem Teilbereich bereits direkt oder indirekt am Elastomer-Ringteil anliegen. Bei einer Verstellung der Druckscheibe in Richtung auf das Elastomer-Ringteil kann dadurch eine Vorspannung im Elastomer-Ringteil aufgebracht werden oder gegebenenfalls verstärkt werden, so dass auch dadurch die Federsteifigkeit erhöht werden kann.

Damit ist mit einem sehr einfachen und kostengünstigen Lageraufbau die Möglichkeit geschaffen, die Federsteifigkeit des Elastomer-Metall-Lagers zu verändern und einfach an bestimmte Lagergegebenheiten in gewissen Grenzen anzupassen. Eine Verstellung der Druckscheibe kann beispielsweise von außen mit Hilfe eines Hakenschlüssels auch im eingebauten Zustand einfach durchgeführt werden. Vorteilhaft ist eine solche Einstellung unabhängig von der zentralen Verbindungsschraube möglich, so dass im eingebauten Zustand die Schraubenvorspannung und damit gegebenenfalls eine Verbindung zu einem Fahrzeug nicht betroffen ist.

Vorteilhaft können somit auch erfindungsgemäße, einstellbare Elastomer-Metall-Lager, welche an unterschiedliche Einbaugegebenheiten angepasst werden können, in größerer Stückzahl vorgehalten werden, ohne dass für jeden speziellen Lagereinsatz solche Lager subjektiv dimensioniert und hergestellt werden müssen. Die Modifikation eines gattungsgemäßen Elastomer-Metall-Lagers zur Realisierung der Einstellbarkeit ist durch die Verwendung einer in seiner Schraubstellung veränderbaren Druckscheibe einfach und kostengünstig durchführbar.

Explizit wird darauf hingewiesen, dass im Begriff "Elastomer-Metall-Lager" das Wort "Metall" in fachüblicher Weise weit auszulegen ist, so dass neben starren, weitgehend unverformbaren Metallmaterialien auch vergleichbare andere Materialien, insbesondere unverformbare, starre Kunststoffmaterialien mit umfasst sein sollen. Unter dem Begriff "Elastomer" wird fachüblich meistens vulkanisierbarer "Gummi" verstanden, wobei jedoch auch Gummi-Ersatzstoffe mitumfasst sein sollen.

Eine vorteilhafte Weiterbildung wird dadurch erreicht, dass zwischen der Druckscheibe und dem Elastomer-Ringteil ein Elastomer-Zwischenring angeordnet ist, der vorzugsweise im gesamten Verstellbereich am Elastomer-Ringteil unter Spannung anliegt, womit ein ungewolltes Verdrehen der Druckscheibe und damit eine ungewollte Veränderung einer Einstellung der Druckscheibe verhindert wird. Dazu kann die Druckscheibe zum Elastomer-Ringteil hin tellerförmig gewölbt sein, wobei der Elastomer-Zwischenring in dieser Wölbung an der Druckscheibe angehaftet, insbesondere als Gummi-Zwischenring anvulkanisiert ist.

In einer weiteren vorteilhaften Ausgestaltung liegt zwischen der Druckscheibe mit dem angehafteten Elastomer-Zwischenring und dem Elastomer-Ringteil eine flexible Scheibe, vorzugsweise als verformbare Konturblechscheibe. Mittels dieser flexiblen Scheibe wird eine Druckkraft des Elastomer-Zwischenrings gleichmäßiger verteilt auf das Elastomer-Ringteil aufgebracht, wobei durch den Elastomer-Zwischenring ein unerwünschtes Ausbeulen der flexiblen Scheibe verringert wird.

Die zur Druckscheibe hin gerichtete Fläche des Elastomer-Ringteils und damit die Anlagefläche für die flexible Scheibe kann für eine weitere Vergleichmäßigung zudem flach kegelförmig, gegebenenfalls mit einer umlaufenden Einbuchtung im Bereich des Elastomer-Zwischenrings ausgebildet sein.

Bei einer sehr einfachen, konkreten Ausführungsform weist der freie Innenrohrbereich einen kleineren Außendurchmesser auf, als das übrige Innenrohr, wobei die flexible Scheibe eine Öffnung mit diesem kleineren Außendurchmesser aufweist. Damit ist die flexible Scheibe auf den freien Innenrohrbereich aufgesteckt und stützt sich am Übergang zum größeren Außendurchmesser des Innenrohrs axial ab.

Auf den freien Innenrohrbereich ist im Anschluss an die flexible Scheibe eine Gewindehülse aufgesteckt, die sich einerseits an der flexiblen Scheibe abstützt und die andererseits stirnseitig bündig mit dem freien Stützrohrbereich verläuft. Die Gewindehülse weist dabei ein Außengewinde entsprechend dem Innengewinde der Druckscheibe auf. Die Gewindehülse und die flexible Scheibe sind mit der zentralen Verbindungsschraube fixierbar, wobei zudem ein Anschlussteil des ersten zu lagernden Bauteils anschraubbar ist.

Konkret ist mittels der Verbindungsschraube ein in einer Radialebene angeordnetes plattenförmiges Anschlussteil des ersten zu lagernden Bauteils über eine dort angebrachte Bohrung stirnseitig mit dem Innenrohr verbindbar.

In einer bevorzugten Ausführungsform ist das Elastomer-Ringteil ein Elastomer-Konusteil, das sich gegenüberliegend zur Druckscheibe konisch verjüngt. Das eingeformte Anschlussteil ist als stabiles Topfteil mit offenem Topfboden, durch den das Innenrohr ragt, ausgebildet, wobei der Topfrand als vom Elastomer-Ringteil abragende, kragenförmige Anschlussplatte ausgeführt ist.

Weiter kann im Bereich des Topfbodenrandes des offenen Topfbodens das Elastomer-Ringteil einen umlaufenden Elastomer-Wulst als Elastomeranschlag aufweisen, der im Herstellzustand das Innenrohr in Axialrichtung überragt und der im eingebauten Lagerzustand unter Vorspannung und statischer Last gegenüber einer stirnseitig mit dem Innenrohr mit der Verbindungsschraube verschraubten Anschlagplatte einen Anschlagfreiraum aufweist. Der Elastomeranschlag kommt somit nur bei extremen Lagerbelastungen zum Einsatz.

Das Elastomer-Metall-Lager wird vorzugsweise mit vertikaler Achse und oben liegender Druckscheibe an der Lagerstelle eingebaut. Das erfindungsgemäße Lager ist beispielsweise zur Lagerung von Aggregaten, insbesondere zur Lagerung einer Brennkraftmaschine in einem Kraftfahrzeug geeignet, kann jedoch auch zur Lösung anderer Lageraufgaben, zum Beispiel als Fahrerhauslager oder Kabinenlager, herangezogen werden.

Anhand einer Zeichnung wird ein Ausführungsbeispiel der Erfindung näher erläutert.

Es zeigen:
- Figur 1: ein Herstellteil des mechanisch verstellbaren Elastomer-Metall-Lagers,
- Figur 2: eine Einbausituation des Elastomer-Metall-Lagers nach Figur 1 in einem nicht vorgespannten Zustand,
- Figur 3: die Einbausituation nach Figur 2 im vorgespannten Zustand, und
- Figur 4: die Einbausituation nach Figur 3 im vorgespannten Zustand unter statischer Last.

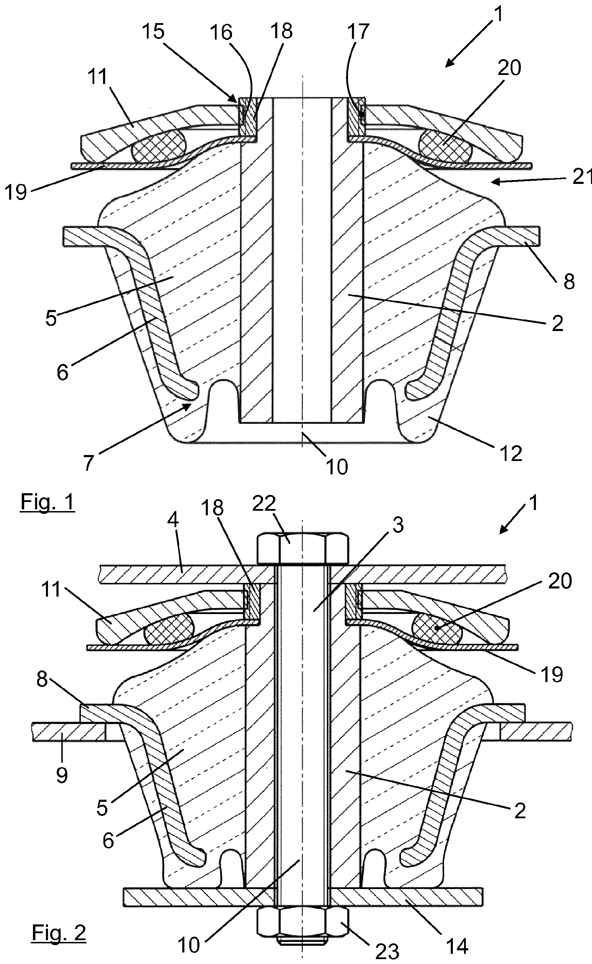

In Figur 1 ist ein Herstellteil eines mechanisch verstellbaren Elastomer-Metall-Lagers 1 in der Art eines Konuslagers gezeigt, welches ein zentrales, stabiles starres Innenrohr 2 aus Metall aufweist. Wie aus der Einbausituation der Figuren 2 bis 4 ersichtlich, ist mit einer zentralen Verbindungsschraube 3 durch das Innenrohr ein erstes zu lagerndes Bauteil 4, hier beispielsweise ein Aufbauteil eines Fahrzeugs mit dem Innenrohr 2 verbunden. Ein Elastomer-Ringteil 5 als tragendes Elastomerteil umschließt das Innenrohr 2 und ist konkret als Gummiringteil am Innenrohr anvulkanisiert.

In das Elastomer-Ringteil 5 ist ein Anschlussteil als stabiles Topfteil 6 eingeformt, welches einen offenen Topfboden 7 aufweist, durch den das Innenrohr 2 ragt und das mit einem Topfrand als radial vom Elastomer-Ringteil 5 abragende Anschlussplatte 8 ausgebildet ist. Wie aus der Einbausituation der Figuren 2 bis 4 ersichtlich ist, wird mit dieser Anschlussplatte 8 ein zweites zu lagerndes Bauteil 9, beispielsweise eine Motorstütze einer Brennkraftmaschine eines Fahrzeugs verbunden.

Das Elastomer-Metall-Lager 1 ist mit vertikaler Achse 10 eingebaut, wobei in einem oberen Stirnseitenbereich eine massive Druckscheibe 11 angeordnet ist mit einer zentralen Bohrung, durch die mittelbar die Verbindungsschraube 3 geführt ist.

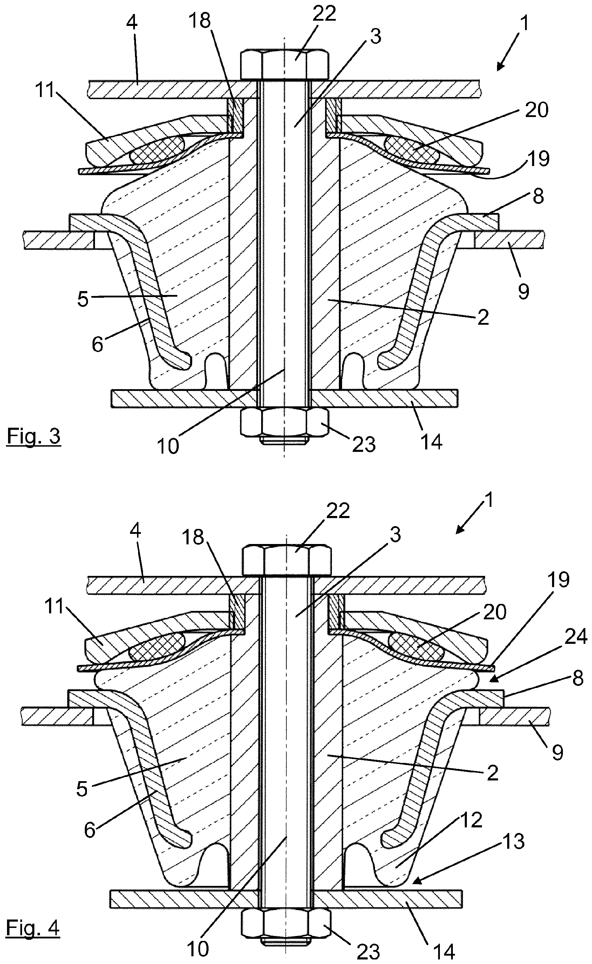

Das Elastomer-Ringteil 5 ist ein Elastomer-Konusteil, das sich gegenüberliegend zur Druckscheibe 11 konisch verjüngt. Im Bereich des Topfbodenrandes des offenen Topfbodens 7 weist das Elastomer-Ringteil 5 einen umlaufenden Elastomer-Wulst als Elastomeranschlag 12 auf, der im Herstellzustand entsprechend Figur 1 das Innenrohr 2 in Axialrichtung überragt. In der in Figur 4 dargestellten Einbausituation unter Vorspannung mittels der Druckscheibe 11 und unter statischer Last ist ein Anschlagfreiraum 13 zwischen dem Elastomeranschlag 12 und einer Anschlagplatte 14 gebildet, welche mit der Verbindungsschraube 3 von unten her stirnseitig mit dem Innenrohr 2 verschraubt ist.

Die zentrale Bohrung 15 der Druckscheibe 11 weist ein Innengewinde 16 auf, mit dem die Druckscheibe 11 auf ein Außengewinde 17 eines axial oben aus dem Elastomer-Ringteil 5 vorstehenden freien Innenrohrbereichs aufgeschraubt ist. Dieser freie Innenrohrbereich ist konkret durch eine Gewindehülse 18 gebildet, welche von oben her auf den freien Innenrohrbereich, welcher einen gegenüber dem übrigen Innenrohr kleineren Außendurchmesser aufweist, aufgesteckt ist. Mit der Gewindehülse 18 ist zudem eine flexible Scheibe 19 als verformbare Konturblechscheibe mit einer zentralen Bohrung am Innenrohr 2 fixiert.

Zwischen der Druckscheibe 11 und der flexiblen Scheibe 19 liegt ein an der Druckscheibe 11 angeordneter, zum Beispiel angehafteter, Elastomer-Zwischenring 20. Die Druckscheibe 11 ist hier nach unten tellerförmig gewölbt, wobei der Elastomer-Zwischenring in dieser Wölbung angeordnet ist und auf die flexible Scheibe 19 eine Druckkraft ausübt, so dass diese im Bereich des Elastomer-Zwischenrings 20 je nach der Größe der Druckkraft eine mehr oder weniger große Verformung aufweist.

Die zur Druckscheibe 11 bzw. zur flexiblen Scheibe 19 hin gerichtete Oberfläche des Elastomer-Ringteils 5 ist flach kegelförmig mit einer umlaufenden Einbuchtung 21 ausgebildet.

Die Funktion des mechanisch verstellbaren Elastomer-Metall-Lagers 1 wird anhand der Einbausituationen der Figuren 2 bis 4 weiter erläutert:
Wie aus Figur 2 ersichtlich, stützt sich in der Einbaulage der Schraubenkopf 22 der Vebindungsschraube 3 am oberen, ersten zu lagernden Bauteil 4 und eine Schraubenmutter 23 von unten her an der Anschlagplatte 14 über das Innenrohr 2 als Distanzstück unveränderbar ab.

In Figur 2 ist eine unvorgespannte Einbausituation dargestellt, bei der die Druckscheibe 11 nur wenig auf die Gewindehülse 18 aufgeschraubt ist, so dass ersichtlich über die Druckscheibe 11 mit dem angehafteten Elastomer-Zwischenring 20 und die nachfolgende flexible Scheibe 19 keine oder nur eine geringe Vorspannung auf das Elastomer-Ringteil 5 von oben her aufgebracht wird. Dennoch wird ersichtlich beim Ausfedern des Lagers nach oben eine freie Verformung des Elastomer-Ringteils 5 durch die bereits etwas gewölbte flexible Scheibe 19 behindert und damit die Federsteifigkeit nach oben gegebenenfalls mittels der Druckscheibe 11 bereits reduziert.

In der Einbausituation nach Figur 3 ist der maximal vorgespannte Zustand gezeigt, bei dem die Druckscheibe 11 ganz auf die Gewindehülse 18 in Richtung auf das Elastomer-Ringteil 5 aufgeschraubt ist. Dadurch ist der Elastomer-Zwischenring 20 unter Aufbringung einer Vorspannung über die zwischengeschaltete flexible Scheibe 19 auf das Elastomer-Ringteil 5 stark verformt, wodurch eine betriebsbedingte belastungsabhängige Verformung des Elastomer-Ringteils 5 stark behindert ist, so dass die Federkonstante insbesondere in vertikaler Richtung entsprechend erhöht ist. In Zwischenstellungen der Druckscheibe 11 zwischen den Einstellungen in Figur 2 und Figur 3 ist eine zugeordnete, dazwischenliegende Einstellung der Federkonstante möglich.

Die endgültige Einbausituation mit der Einstellung nach Figur 3 ist in Verbindung mit einer statischen Last in Figur 4 dargestellt, wodurch sich das Elastomer-Ringteil 5 so verformt ist, dass der Elastomer-Anschlag 12 von der Anschlagplatte 14 mit einem dazwischenliegenden Anschlag-Freiraum abgehoben ist und zwischen der Anschlussplatte 8 und der flexiblen Scheibe 19 ein umlaufender Gummiwulst 24 ausgebildet ist.

Bei dem mechanisch verstellbaren Elastomer-Metall-Lager 1 als Konuslager kann somit durch eine Drehverstellung der Druckscheibe 11, beispielsweise mittels eines Hakenschlüssels, die Federkonstante, insbesondere in vertikaler Richtung in einem Einstellbereich zwischen zwei durch die Länge der Gewindehülse 18 vorgegebenen Extremlagen verändert und an vorliegende Lagegegebenheiten gegebenenfalls auch nach einem Einbau ohne Veränderung der Schraubenspannung der Verbindungsschraube 3 eingestellt und angepasst werden.

## Patentansprüche

1. Elastomer-Metall-Lager, insbesondere als Konuslager,
mit einem zentralen, stabilen, starren, vorzugsweise metallischen Innenrohr (2),
mit einer zentralen Verbindungsschraube (3) durch das Innenrohr (2), mit der ein erstes zu lagerndes Bauteil (4) mit dem Innenrohr (2) verbindbar ist,
mit einem Elastomer-Ringteil (5), das das Innenrohr (2) umschließt, und in das ein stabiles, starres, vorzugsweise metallisches Anschlussteil (6) eingeformt ist, welches einen vom Elastomer-Ringteil (5) radial abstehenden Anschlussbereich (8) zum Anschluss eines zweiten zu lagernden Bauteils (9) aufweist, und
mit einer in einem Stirnseitenbereich angeordneten massiven Druckscheibe (11) mit einer zentralen Bohrung (15), durch die die Verbindungsschraube (3) geführt ist,
**dadurch gekennzeichnet,**
**dass** die zentrale Bohrung (15) der Druckscheibe (11) ein Innengewinde (16) aufweist,
**dass** ein axial aus dem Elastomer-Ringteil (5) vorstehender freier Innenrohrbereich ein dem Innengewinde (16) zugeordnetes Außengewinde (17) trägt,
**dass** die Druckscheibe (11) mit ihrem Innengewinde (16) auf das Außengewinde (17) des Innenrohrs (2) geschraubt ist, wobei die Druckscheibe (11) durch mehr oder weniger Aufschrauben auf den freien Innenrohrbereich axial in ihrer Lage in einem Verstellbereich relativ zum Elastomer-Ringteil verstellbar ist.

2. Elastomer-Metall-Lager nach Anspruch 1, **dadurch gekennzeichnet, dass** die Druckscheibe (11) zum Elastomer-Ringteil (5) hin tellerförmig gewölbt ist, und
dass zwischen der Druckscheibe (11) in deren Wölbung und dem Elastomer-Ringteil (5) ein an die Druckscheibe (11) angehafteter Elastomer-Zwischenring (20) angeordnet ist.

3. Elastomer-Metall-Lager nach Anspruch 2, **dadurch gekennzeichnet, dass** zwischen der Druckscheibe (11) mit dem angehafteten Elastomer-Zwischenring (20) und dem Elastomer-Ringteil (5) eine flexible Scheibe (19), vorzugsweise als verformbare Konturblechscheibe angeordnet ist.

4. Elastomer-Metall-Lager nach Anspruch 3, **dadurch gekennzeichnet, dass** die zur Druckscheibe (11) hin gerichtete Fläche des Elastomer-Ringteils (5) und damit die Anlagefläche für die flexible Scheibe (19) flach kegelförmig, gegebenenfalls mit einer umlaufenden Einbuchtung (21) im Bereich des Elastomer-Zwischenrings (20), ausgebildet ist.

5. Elastomer-Metall-Lager nach Anspruch 3 oder 4, **dadurch gekennzeichnet, dass** der freie Innenrohrbereich einen kleineren Außendurchmesser aufweist als das übrige Innenrohr (2),
dass die flexible Scheibe (19) eine zentrale Öffnung mit einem gleichen, diesem Außendurchmesser entsprechenden Innendurchmesser aufweist und auf den freien Stützrohrbereich aufgesteckt ist, dergestalt dass sie am Übergang zum größeren Außendurchmesser des Innenrohrs (2) axial abgestützt ist,
dass auf den freien Innenrohrbereich eine Gewindehülse (18) aufgesteckt ist, die sich einerseits an der flexiblen Scheibe (19) abstützt und die andererseits stirnseitig bündig mit dem freien Stützrohrbereich verläuft, wobei die Gewindehülse (18) ein Außengewinde (17) entsprechend dem Innengewinde (16) der Druckscheibe (11) aufweist, und
dass die Gewindehülse (18) mit der zentralen Verbindungsschraube (3) über ein dazwischen liegendes Anschlussteil des ersten zu lagernden Bauteils (4) fixierbar ist.

6. Elastomer-Metall-Lager nach einem der Ansprüche 1 bis 5, **dadurch gekennzeichnet, dass** mittels der Verbindungsschraube (3) ein in einer Radialebene angeordnetes, plattenförmiges Anschlussteil des ersten zu lagernden Bauteils (9) über eine dort angebrachte Bohrung stirnseitig mit dem Innenrohr (3) verbindbar ist.

7. Elastomer-Metall-Lager nach einem der Ansprüche 1 bis 6, **dadurch gekennzeichnet, dass** das Elastomer-Ringteil (5) ein Elastomer-Konusteil ist, das sich gegenüberliegend zur Druckscheibe (11) konisch verjüngt, und
dass das eingeformte Anschlussteil als stabiles Topfteil (6) mit offenem Topfboden (7), durch den das Innenrohr (2) ragt, und mit einem Topfrand als Anschlussplatte (8) ausgebildet ist.

8. Elastomer-Metall-Lager nach Anspruch 7, **dadurch gekennzeichnet, dass** im Bereich des Topfbodenrandes des offenen Topfbodens (7) das Elastomer-Ringteil (5) einen umlaufenden Elastomer-Anschlag (12) aufweist, der im Herstellzustand das Innenrohr (2) in Axialrichtung überragt und der im eingebauten Lagerzustand unter Vorspannung und statischer Last gegenüber einer stirnseitig mit dem Innenrohr (2) mit der Verbindungsschraube (3) verschraubten Anschlagplatte (14) einen Anschlagfreiraum (13) aufweist.

9. Elastomer-Metall-Lager nach einem der Ansprüche 1 bis 8, **dadurch gekennzeichnet, dass** das Elastomer-Metall-Lager (1) mit vertikaler Achse (10) und mit oben liegender Druckscheibe an der Lagerstelle eingebaut ist.
